# DEMANDE DE BREVET EUROPEEN

(11) **EP 4 836 290 A1**
(43) Date de publication de la demande: **04.11.2026**
(21) Numéro de dépôt: 26169688.4
(22) Date de dépôt: 31.03.2026
(51) Int. Cl.: H02S 20/23, A01G 9/24, F24S 25/50, F24S 30/425, H02S 20/30, F24S 30/00

(54) **INSTALLATION SOLAIRE COMPORTANT DES PANNEAUX SOLAIRES SUSPENDUS**

(30) Priorité: 30.04.2025 FR 2504600
(71) Demandeur: POMA, 38340 Voreppe (FR)
(72) Inventeur: BABAZ, Mathieu, 38960 Saint Etienne de Crossey (FR)
(74) Mandataire: Alatis

(57) **Abrégé**

L'invention concerne une installation solaire (10) comprenant une structure de support comportant une structure porteuse (36) et une rangée de panneaux (14), chacun des panneaux (20) étant suspendu latéralement par la structure porteuse (36), la rangée de panneaux (14) comportant au moins un premier sous-ensemble (26A) de panneaux inclinables (20) qui sont inclinables et qui comportent chacun au moins un élément actif photovoltaïque et/ou héliothermique, la rangée de panneaux (14) comportant au moins un deuxième sous-ensemble (26B) de panneaux inclinables (20) qui sont inclinables chacun au moins entre une position couvrante et une position ouverte, le premier et le deuxième sous-ensembles (26A, 26B) de panneaux inclinables (20) étant disjoints.

## Description

### DOMAINE TECHNIQUE DE L'INVENTION

L'invention concerne, de façon générale, le domaine des installations solaires comportant des panneaux solaires, photovoltaïques ou héliothermiques, suspendus à une structure, en particulier des câbles.

Par ailleurs, l'invention a trait aux domaines des structures de couverture des sols pour la gestion de l'exposition solaire, des eaux pluviales ou de l'exposition au gel, par exemple pour l'agriculture ou en milieu urbain.

### ÉTAT DE LA TECHNIQUE ANTERIEURE

Dans le document EP4362323 est divulguée une installation solaire comprenant un support présentant deux câbles porteurs et des panneaux photovoltaïques supportés par lesdits câbles, les panneaux formant une rangée de panneaux. Les panneaux photovoltaïques sont espacés les uns des autres par une distance prédéterminée et sont inclinables, donc mobiles, simultanément dans une même direction. Un désavantage d'une telle installation solaire est l'incapacité de gérer les panneaux distinctement en fonction de leur position attribuée le long de la rangée de panneaux, par exemple lorsque celle-ci suit deux lignes de pente distinctes. L'orientation des panneaux en direction du soleil n'est alors pas optimisée en fonction du positionnement de chaque panneau le long de la rangée.

De plus, d'autres désavantages découlent de cette installation solaire, par exemple l'incapacité de gérer les eaux pluviales dont l'écoulement n'est pas dirigé, ou de protéger du gel le sol partiellement couvert. Cette solution n'est alors pas adaptée au domaine agricole par exemple.

Pour pallier ce problème, il est proposé par exemple dans le document US2024243692 une installation solaire comprenant une rangée de panneaux photovoltaïques superposés comme des tuiles. Ainsi, la rangée de panneaux forme une couverture continue protégeant le sol et orientant l'écoulement des eaux pluviales. Ces panneaux sont néanmoins fixes. Il est en effet compliqué d'orienter des panneaux lorsqu'ils ne peuvent pas pivoter librement du fait qu'un ou plusieurs panneaux adjacents les limitent dans leurs mouvements de rotation.

Cette configuration engendre des risques de détérioration des panneaux selon les conditions météorologiques (grêle, fortes bourrasques), et n'est pas optimisée en termes de rendement de production d'énergie du fait de l'orientation fixe des panneaux et, éventuellement, de rendement des terres agricoles situées en dessous de ces rangées de panneaux, à cause d'un ombrage trop important diminuant le temps d'exposition au soleil des plantes qu'elles comportent.

### EXPOSE DE L'INVENTION

L'invention vise à remédier à toutes ou partie des inconvénients de l'état de la technique et à proposer une installation solaire dont l'orientation des panneaux inclinables est optimisée, de sorte que la rangée de panneaux soit mieux adaptée et adaptable à son environnement.

Pour ce faire est proposé, selon un premier aspect de l'invention, une installation solaire comprenant une structure de support comportant une structure porteuse parallèle à une direction de référence, et une rangée de panneaux disposés le long de la direction de référence, chacun des panneaux étant suspendu latéralement par la structure porteuse, la rangée de panneaux comportant au moins un premier sous-ensemble de panneaux inclinables qui sont inclinables chacun au moins entre une position couvrante et une position ouverte par pivotement autour d'un axe de pivotement perpendiculaire à la direction de référence et qui comportent chacun au moins un élément actif photovoltaïque et/ou héliothermique, un premier câble de commande de pivotement qui s'étend parallèlement à la direction de référence étant relié aux panneaux inclinables du premier sous-ensemble de panneaux inclinables, l'installation solaire étant remarquable en ce que la rangée de panneaux comporte au moins un deuxième sous-ensemble de panneaux inclinables qui sont inclinables chacun au moins entre une position couvrante et une position ouverte par pivotement autour d'un axe de pivotement perpendiculaire à la direction de référence, un deuxième câble de commande de pivotement qui s'étend parallèlement à la direction de référence étant relié aux panneaux inclinables du deuxième sous-ensemble de panneaux inclinables, le premier et le deuxième sous-ensembles de panneaux inclinables étant disjoints.

Il est alors possible de manipuler les deux sous-ensembles distinctement. Cela permet d'appliquer sur deux panneaux inclinables successifs quelconques deux rotations différentes (par leur sens ou leur amplitude de rotation). Ainsi, il est possible de mieux moduler l'ombrage projeté sur un plan situé en dessous de l'installation solaire. Par exemple, il sera préférable en période chaude et ensoleillée, d'ombrager au plus possible le plan situé en dessous de l'installation si ce dit plan est un parc de stationnement automobile. Au contraire, si ledit plan est un champ agricole comprenant des plantations nécessitant une forte luminosité solaire, il sera préférable que l'ombre projeté soit minimale. Ainsi, avec deux sous-ensembles distincts, il est possible d'adapter la position des panneaux inclinables pour optimiser l'énergie solaire récupérée tout en modulant l'ombrage en fonction de l'environnement où est installée l'installation solaire.

Aussi, l'utilisation de deux brins de câbles de commandes pour orienter les sous-ensembles de panneaux inclinables permet d'optimiser la modulation de l'ombrage généré en diminuant les coûts de cette modulation, puisqu'il n'est pas utile de motoriser indépendamment chaque panneau inclinable.

Selon un mode de réalisation, la structure porteuse comprend deux câbles porteurs, les deux câbles porteurs s'étendant parallèlement à la direction de référence. Cela permet de réduire les coûts de production de l'installation solaire, puisque la structure porteuse formée par des câbles porteurs est moins lourde et plus simple à produire qu'une structure comprenant des poutres par exemple.

Selon un mode de réalisation, chaque câble porteur est équipé de plusieurs pivots, ces pivots étant disposés de sorte que chaque pivot d'un câble porteur ait un pivot correspondant sur l'autre câble porteur, formant ainsi des paires de pivots alignées sur un même axe de pivotement et associées au panneau associé au dit axe.

Alternativement, la structure porteuse comporte des pylônes associés chacun à un des panneaux, par l'intermédiaire d'un pivot, qui peut être positionné par exemple au centre de gravité du panneau associé.

Selon un mode de réalisation, dans la position couvrante, la rangée de panneaux forme une couverture continue. L'installation forme alors, dans la position couvrante, une couverture continue au-dessus du sol, assurant une protection du sol par exemple contre les précipitations ou le refroidissement radiatif du sol en hiver. Une telle solution peut être particulièrement avantageuse lorsque l'installation couvre un parking, ou dans le domaine agricole, notamment lorsque le sol situé en dessous de l'installation est un champ comprenant des plantes et/ou des animaux et/ou des agents de traitement craignant l'eau donc la pluie. L'installation fait alors ruisseler l'eau le long de la rangée de panneau en direction d'un point plus bas, maintenant le champs en dessous au sec.

Selon un mode de réalisation, dans la position couvrante, les panneaux inclinables se chevauchent partiellement et forment un tuilage le long de la position de référence. Le tuilage permet une meilleure étanchéité à l'eau entre deux panneaux inclinables successifs, et donc d'améliorer le ruissellement de l'eau de pluie afin d'accroître la protection du plan situé en dessous de la rangée de panneaux.

Alternativement, dans la position couvrante, les panneaux inclinables se joignent par contact sans chevauchement le long de la direction de référence. Il est alors préférable que chaque panneau comprenne un joint à ses extrémités de sorte que l'interface entre deux panneaux puisse être étanche. Une telle rangée de panneaux inclinables couvre une plus grande surface, à nombre de panneaux égal, que lorsque la rangée forme un tuilage.

Suivant un autre mode de réalisation, dans la position couvrante, les panneaux inclinables sont distants les uns des autres. Une telle disposition ne permet pas d'occulter complètement la surface sous-jacente, mais autorise comme les précédentes un réglage d'inclinaison différent pour les deux sous-ensembles de panneaux inclinables.

Le cas échéant, l'installation, peut comporter des collecteurs d'eau(x), par exemple des chéneaux, et notamment de chéneaux positionnés sur les bords des panneaux inclinables parallèles à l'axe de pivotement. Les collecteurs d'eaux permettent de diriger le ou les flux d'eaux vers une destination autre que celle indiquée par la pente de la rangée de panneaux, souvent héritée de la pente naturelle de l'environnement où est installée la solution. Ces collecteurs d'eaux peuvent par exemple être intégrés aux joints évoqués dans l'installation présentant la rangée de panneaux inclinables où les dits panneaux ne se chevauchent pas et sont joints bouts à bouts.

Selon un mode de réalisation, la direction de référence est au moins localement parallèle à une ligne de plus grande pente du sol sur lequel est fixé la structure de support. L'installation solaire présente alors au moins une portion dans laquelle la rangée de panneaux inclinables est inclinée (et forme donc un angle aigu avec un plan horizontal). Autrement dit, les centres de gravité de deux panneaux inclinables successifs d'un même sous-ensemble sont situés à des altitudes différentes.

Selon un autre mode de réalisation, la direction de référence est au moins localement parallèle à une ligne de niveau. L'installation solaire présente alors au moins une portion dans laquelle la rangée de panneaux inclinables est parallèle au plan horizontal. Autrement dit, les centres de gravité de deux panneaux inclinables successifs d'un même sous-ensemble sont situés à la même altitude.

Selon un mode de réalisation, le premier sous-ensemble suit une première ligne de plus grande pente et le deuxième sous-ensemble suit une deuxième ligne de plus grande pente, la première ligne de plus grande pente et la deuxième ligne de plus grande pente formant un angle non plat, de préférence un angle supérieur ou égal à 110°, de préférence encore un angle inférieur ou égal à 170°.

Dans une telle disposition, l'installation est particulièrement avantageuse, permettant, lorsque le premier sous-ensemble est celui associé à l'une des deux plus grandes pentes et le deuxième sous-ensemble est celui associé à l'autre des deux plus grandes pentes, d'optimiser l'inclinaison de chacun des deux sous-ensembles de sorte que leurs panneaux inclinables associés soit orientés au mieux dans la direction voulue en fonction des besoins.

Selon un mode de réalisation, deux panneaux inclinables successifs quelconques du premier sous-ensemble de panneaux inclinables sont séparés par un panneau inclinable du deuxième sous-ensemble de panneaux inclinables, et deux panneaux inclinables successifs quelconques du deuxième sous-ensemble de panneaux inclinables sont séparés par un panneau inclinable du premier sous-ensemble de panneaux inclinables. Il y a donc une alternance des panneaux inclinables des deux sous-ensembles.

Selon un mode de réalisation, les éléments actifs peuvent être bifaciaux, au sens où ils sont en mesure de produire de l'énergie électrique ou thermique aussi bien en réponse à un rayonnement incident sur leur face supérieur qu'en réponse à un rayonnement incident sur leur face inférieure.

Selon un mode de réalisation, les panneaux inclinables du deuxième sous-ensemble de panneaux inclinables comportent chacun au moins un élément actif photovoltaïque et/ou héliothermique. Ce mode de réalisation permet d'étendre la surface d'éléments actifs permettant la production d'énergie à partir de lumière ou d'énergie solaire. Elle a également pour avantage d'augmenter l'ombrage projeté sur le plan situé en dessous de la rangée de panneaux inclinables.

Selon un autre mode de réalisation, certains au moins des panneaux inclinables du deuxième sous-ensemble de panneaux inclinables ne comportent pas d'éléments actifs photovoltaïque et/ou héliothermique. Ces panneaux peuvent alors être occultants ou transparents, selon les besoins.

Suivant un mode de réalisation, ces panneaux sont réfléchissants. Il peut s'agir notamment de miroirs.

Selon un mode de réalisation, la rangée de panneaux comporte au moins un sous-ensemble de panneaux non occultants, comportant chacun au moins une portion intégralement transparente qui, en position couvrante, permet à une lumière incidente de traverser lesdits panneaux non occultants, le sous-ensemble de panneaux non occultant pouvant inclure tout ou partie du premier sous-ensemble de panneaux inclinables et/ou du deuxième sous-ensemble de panneaux inclinables.

Ainsi, l'ombrage projeté à l'arrière des panneaux est diminué. Plus particulièrement, l'ombrage est totalement annulé localement à l'arrière d'un panneau inclinable transparent. Ainsi, l'énergie lumineuse incidente passe au travers du panneau transparent et, suivant l'inclinaison du soleil atteint le sol ou un panneau adjacent. Lorsque les panneaux inclinables sont orientés dans une direction prédéterminée par rapport au soleil, un rayon incident pour passer au travers du panneau inclinable transparent et atteindre un panneau inclinable adjacent présentant au moins un élément actif photovoltaïque et/ou héliothermique. Ce mode de réalisation est particulièrement avantageux lorsque les panneaux forment un tuilage, dans la mesure où il permet de concilier une couverture continue en position couvrante avec un bon ensoleillement des éléments actifs.

De préférence, dans la position couvrante, la portion intégralement transparente d'au moins un des panneaux inclinables du sous-ensemble de panneaux non occultants est adjacente à un élément actif d'un panneau inclinable adjacent de la rangée de panneaux.

Ainsi, malgré un chevauchement partiel entre deux panneaux inclinables successifs et deux brins de câbles de commandes permettant d'orienter distinctement deux sous-ensembles de panneaux inclinables, quelle que soit la hiérarchie de superposition, l'élément actif d'un panneau inclinable associé ne sera jamais ombragé par un panneau inclinable adjacent.

Selon un mode de réalisation, le premier sous-ensemble de panneaux inclinables et le sous-ensemble de panneaux non occultants ont une intersection non vide, le premier sous-ensemble de panneaux inclinables étant de préférence inclus dans le sous-ensemble de panneaux non occultants. Dans cette hypothèse, au moins certains, et le cas échéant la totalité des panneaux du premier sous-ensemble, qui par définition comportent chacun au moins un élément actif photovoltaïque et/ou héliothermique, comporte en outre au moins une portion intégralement transparente. Ainsi, malgré le tuilage de toute la rangée de panneaux inclinables, l'élément actif d'un panneau inclinable associé ne sera jamais ombragé par un panneau inclinable adjacent.

Selon un mode de réalisation, le deuxième sous-ensemble de panneaux inclinables et le sous-ensemble de panneaux non occultants ont une intersection non vide, le deuxième sous-ensemble de panneaux inclinables étant de préférence inclus dans le sous-ensemble de panneaux non occultants. Les panneaux du deuxième sous-ensemble peuvent, dans cette hypothèse, être soit intégralement transparents, soit partiellement transparent, et inclure comme les panneaux du premier sous-ensemble un élément actif photovoltaïque et/ou héliothermique.

Dans le cas où les panneaux inclinables du premier et du deuxième sous-ensembles sont identiques, par exemple lorsque chaque panneau comprend une surface comprenant un élément actif entre deux portions transparentes, l'installation permet d'optimiser la surface d'éléments actifs comprise par la rangée de panneaux inclinables, tout en conservant une étanchéité continue en position couvrante, que ce soit avec ou sans chevauchement des panneaux adjacents.

Selon un mode de réalisation, le premier sous-ensemble comporte les panneaux inclinables comportant les éléments actifs et qui ne comportent pas d'éléments transparents, et le deuxième sous-ensemble comporte les panneaux inclinables comportant les éléments transparents et qui ne comportent pas d'éléments actifs. En particulier, les panneaux inclinables du premier sous-ensemble peuvent être entièrement occultants et recouverts intégralement par leur élément actif photovoltaïque ou héliothermique, alors que les panneaux du deuxième sous-ensemble peuvent être intégralement transparents.

Selon un mode de réalisation, que l'axe de pivotement passe par le centre de gravité du panneau inclinable associé. Ainsi, la puissance nécessaire pour faire pivoter chaque panneau inclinable est minimale.

Selon un mode de réalisation, l'installation comporte au moins un premier moteur de traction du premier câble de commande. Suivant une première variante, le premier câble de commande constitue une boucle fermée de câble tendue entre deux poulies d'extrémité, et est apte à être tiré indifféremment dans les deux sens par un unique premier moteur. Alternativement, selon une deuxième variante, le premier câble appartient à un câble ouvert dont les deux extrémités sont tirées par deux premiers moteurs.

Selon un mode de réalisation, l'installation comporte au moins un deuxième moteur de traction du deuxième câble de commande. Suivant une première variante, le deuxième câble de commande constitue une boucle fermée de câble tendue entre deux poulies d'extrémité, et est apte à être tiré indifféremment dans les deux sens par un unique deuxième moteur. Alternativement, selon une deuxième variante, le deuxième câble appartient à un câble ouvert dont les deux extrémités sont tirées par deux deuxièmes moteurs.

Selon un mode de réalisation, l'installation comporte un dispositif de commande apte à commander le premier moteur et le cas échéant le deuxième moteur de traction en fonction d'un ou plusieurs signaux en provenance d'un ou plusieurs capteurs, de préférence choisis parmi les capteurs suivants : un capteur de luminosité ; un capteur d'hygrométrie ; un capteur de mouvement ; un capteur de position ; un capteur de courant ou de tension électrique placé dans un circuit comportant au moins un élément actif d'au moins un des panneaux inclinables du premier sous-ensemble .

L'installation est alors automatisée, et peut s'adapter aux conditions environnementales, un capteur ou une combinaison de capteurs tels que susmentionnés permettant par exemple de détecter du vent ou de la grêle.

Suivant un autre aspect de l'invention, celle-ci a également trait à un procédé de pilotage d'une installation solaire telle que décrite plus haut, le procédé étant remarquable en ce qu'il comprend une étape de traction du premier câble de commande, de sorte à entraîner la rotation du premier sous-ensembles associé au dit câble de commande.

Selon un mode de réalisation, le procédé comporte une étape de traction du deuxième câble, de sorte à entraîner le deuxième câble de commande.

Selon un mode de réalisation, à partir de la position couvrante, il comprend une séquence d'ouverture comportant :
- une étape de traction du premier câble dans une première direction entraînant un pivotement des panneaux du premier sous-ensemble dans une première direction de rotation ; puis
- une étape de traction du deuxième câble dans une deuxième direction entraînant un pivotement des panneaux du deuxième sous-ensemble dans une deuxième direction de rotation ; puis
- une étape de traction du premier câble dans la deuxième direction entraînant un pivotement des panneaux du premier sous-ensemble dans la deuxième direction de rotation.

Dans toutes les configurations où la rangée de panneaux forme une couverture continue en position couvrante, une telle séquence permet avantageusement d'éviter tout contact entre panneaux adjacents lorsque l'on souhaite que l'inclinaison des panneaux passe d'un côté à l'autre de la position couvrante. La rangée de panneaux inclinables peut alors être orientée dans une direction initialement non accessible. Ceci est particulièrement vrai lorsqu'en position couvrante les panneaux de la rangée se chevauchent partiellement.

Selon un mode de réalisation, le pilotage est fonction d'un ou plusieurs paramètres parmi les paramètres suivants: une consigne d'ombrage ; une position d'une source lumineuse et/ou thermique prédéterminée, de préférence le soleil ; un ou plusieurs paramètres environnementaux, par exemple une force de vent, une direction de vent, une intensité de précipitation, et/ou une température ambiante.

Il est alors possible d'affiner le positionnement des panneaux inclinables associés à l'un ou l'autre des deux sous-ensembles, de sorte que ces dits panneaux inclinables remplissent la fonction qui leur est attribuée, par exemple la production d'énergie et/ou la protection du sol sous l'installation.

De préférence, les panneaux inclinables du premier sous-ensemble sont pilotés indépendamment des panneaux inclinables du deuxième sous-ensemble. De même, les panneaux inclinables du deuxième sous-ensemble sont de préférence pilotés indépendamment des panneaux inclinables du premier sous-ensemble.

Selon un autre aspect de l'invention, celle-ci a également trait à un dispositif de commande configuré pour mettre en œuvre les étapes du procédé de pilotage tel que décrit plus haut, le dispositif de commande étant remarquable en ce qu'il comporte au moins un microcontrôleur destiné à être relié à un premier moteur pour tracter le premier câble de commande et, le cas échéant, à un deuxième moteur pour tracter un deuxième câble de commande, et ce que le microcontrôleur est relié à un ou plusieurs capteurs choisis parmi les capteurs suivants : un capteur de luminosité ; un capteur d'hygrométrie ; un capteur de mouvement ; un capteur de position ; un capteur de courant ou de tension électrique placé dans un circuit comportant au moins un élément actif d'au moins un des panneaux inclinables du premier sous-ensemble.

Selon un autre aspect de l'invention, un produit programme d'ordinateur comprenant des instructions, exécutables par le dispositif de commande comprenant un microprocesseur ou un microcontrôleur, pour la mise en œuvre du procédé de pilotage tel que décrit plus haut, lorsqu'il est exécuté par ledit microprocesseur ou microcontrôleur.

### BREVE DESCRIPTION DES FIGURES

D'autres caractéristiques et avantages de l'invention ressortiront à la lecture de la description qui suit, en référence aux figures annexées, qui illustrent :
- [Fig. 1] : une vue schématique de côté d'une installation solaire comprenant une rangée de panneaux inclinables conformément à l'invention, selon un premier mode de réalisation.
- [Fig. 2] : une vue isométrique schématique de la rangée de panneaux selon le premier mode de réalisation.
- [Fig. 3A] : une vue schématique de trois panneaux inclinables successifs de la rangée de panneaux, dans une première position dite couvrante, selon le premier mode de réalisation.
- [Fig. 3B] : une vue schématique de trois panneaux inclinables successifs de la rangée de panneaux, dans une deuxième position, selon le premier mode de réalisation.
- [Fig. 3C] : une vue schématique de trois panneaux inclinables successifs de la rangée de panneaux, dans une troisième position, selon le premier mode de réalisation.
- [Fig. 3D] : une vue schématique de trois panneaux inclinables successifs de la rangée de panneaux, dans une quatrième position, selon le premier mode de réalisation.
- [Fig. 3E] : une vue schématique de trois panneaux inclinables successifs de la rangée de panneaux, dans une cinquième position, selon le premier mode de réalisation.
- [Fig. 3F] : une vue schématique de trois panneaux inclinables successifs de la rangée de panneaux, dans une sixième position, dite couvrante, selon le premier mode de réalisation.
- [Fig. 4A] : une vue schématique de trois panneaux inclinables successifs de la rangée de panneaux, dans une première position dite couvrante, selon un deuxième mode de réalisation.
- [Fig. 4B] : une vue schématique de trois panneaux inclinables successifs de la rangée de panneaux, dans une deuxième position, selon le deuxième mode de réalisation.
- [Fig. 4C] : une vue schématique de trois panneaux inclinables successifs de la rangée de panneaux, dans une troisième position, selon le deuxième mode de réalisation.
- [Fig. 4D] : une vue schématique de trois panneaux inclinables successifs de la rangée de panneaux, dans une quatrième position, selon le deuxième mode de réalisation.
- [Fig. 4E] : une vue schématique de trois panneaux inclinables successifs de la rangée de panneaux, dans une cinquième position, selon le deuxième mode de réalisation.
- [Fig. 4F] : une vue schématique de trois panneaux inclinables successifs de la rangée de panneaux, dans une sixième position, selon le deuxième mode de réalisation.
- [Fig. 5] : une vue schématique de trois panneaux inclinables successifs d'une rangée de panneaux, dans une première position dite couvrante, selon un troisième mode de réalisation.
- [Fig. 6] : une vue schématique de côté d'une installation solaire comprenant une rangée de panneaux inclinables, selon un quatrième mode de réalisation.
- [Fig. 7] : une vue schématique de côté d'une installation solaire comprenant une rangée de panneaux inclinables, selon un cinquième mode de réalisation.
- [Fig. 8] : une vue schématique de trois panneaux inclinables successifs d'une rangée de panneaux d'une installation solaire selon un sixième mode de réalisation.
- [Fig. 9] : une vue schématique de trois panneaux inclinables successifs d'une rangée de panneaux d'une installation solaire selon un septième mode de réalisation.
- [Fig. 10] : une vue schématique de trois panneaux inclinables successifs d'une rangée de panneaux d'une installation solaire selon un huitième mode de réalisation, dans une position dite couvrante.
- [Fig. 11] : une vue schématique des trois panneaux inclinables successifs de la rangée de panneaux de l'installation solaire selon le huitième mode de réalisation, dans une deuxième position de captation solaire.

Pour plus de clarté, les éléments identiques ou similaires sont repérés par des signes de référence identiques sur l'ensemble des figures.

### DESCRIPTION DETAILLEE D'UN MODE DE REALISATION

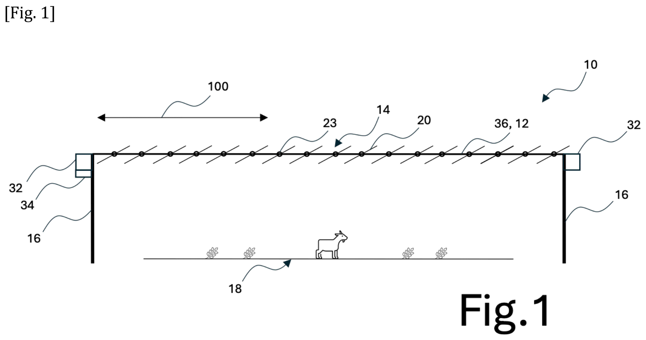

La figure 1 illustre une installation solaire **10** selon un premier mode de réalisation comprenant une structure porteuse **36** configurée pour supporter au moins une rangée de panneaux **14** et s'étendant dans une direction de référence **100** entre au moins deux pylônes **16** de la structure porteuse **36.** La rangée de panneaux **14** est ici disposée à distance au-dessus d'un terrain agricole **18** mais il est également envisagé de recouvrir des d'autres type de sols, par exemple des parcs de stationnement automobile.

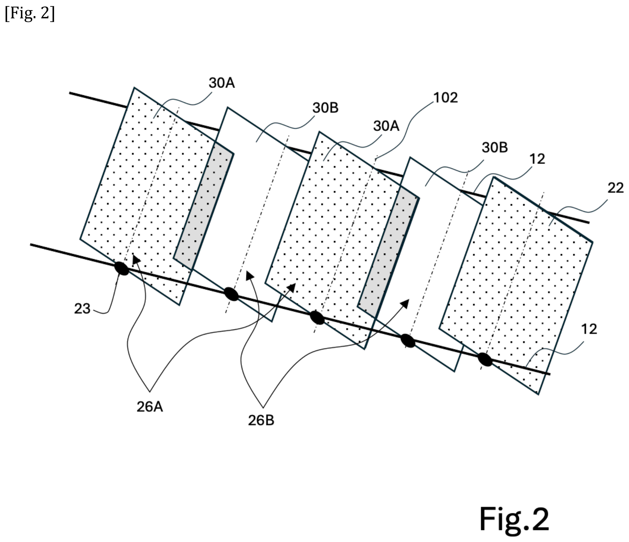

Comme illustré en particulier sur la figure 2, la structure porteuse **36** comprend par exemple deux câbles porteurs **12.** Les deux câbles porteurs **12** s'étendent entre au moins les deux pylônes **16** et sont parallèles entre eux. Dans ce mode de réalisation, les câbles porteurs **12** sont globalement parallèles à une ligne de niveau, autrement dit les deux extrémités des deux câbles **12** présentent un différentiel d'altitude négligeable en fonction de la longueur des dits câbles porteurs **12.** Les câbles porteurs **12** sont parallèles à la direction de référence **100.** Les câbles porteurs **12** sont composés d'un ou plusieurs matériaux configurés pour résister à de fortes charges sur une grande durée tout en étant soumis aux conditions météorologiques extérieures. Ainsi, les câbles porteurs **12** présentent chacun une composition, une structure et une dimension de section prédéterminées pour résister aux conditions auxquelles les dits câbles **12** sont soumis.

La rangée de panneaux **14** comprend une pluralité de panneaux inclinables **20,** dont certains au moins, comme il sera décrit plus tard, sont des panneaux solaires, photovoltaïque ou héliothermiques. Chaque panneau inclinable **20** comprend un corps **22** globalement rectangulaire monté pivotant sur deux pivots **23** associés, fixés aux deux câbles porteurs **12** et alignés sur un axe de pivotement **102** associé qui est localement perpendiculaire aux deux câbles porteurs **12.** Le corps **22** s'étend longitudinalement entre les deux câbles porteurs **12.** Chaque corps **22** de panneau inclinable **20** comprend une face supérieure **24** opposée à une face inférieure du même panneau inclinable **20.** Chaque axe de pivotement **102** passe de préférence par le centre de masse du panneau inclinable **20** associé, et, dans l'hypothèse d'une répartition uniforme de la masse du corps **22** du panneau, scinde le corps **22** du panneau inclinable **20** en deux parties égales). Ainsi, l'énergie nécessaire pour faire pivoter chaque panneau inclinable **20** est minimale.

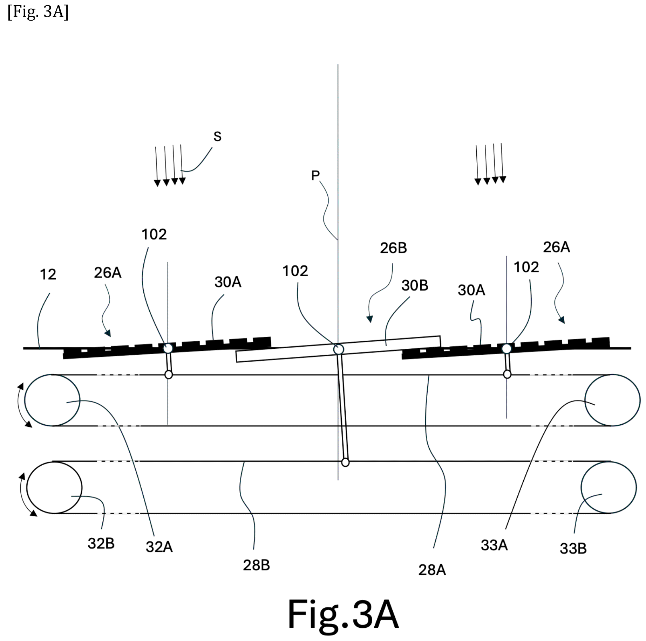

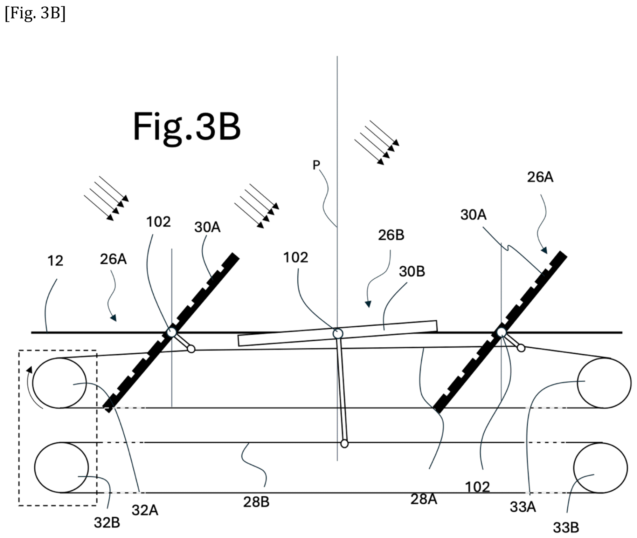

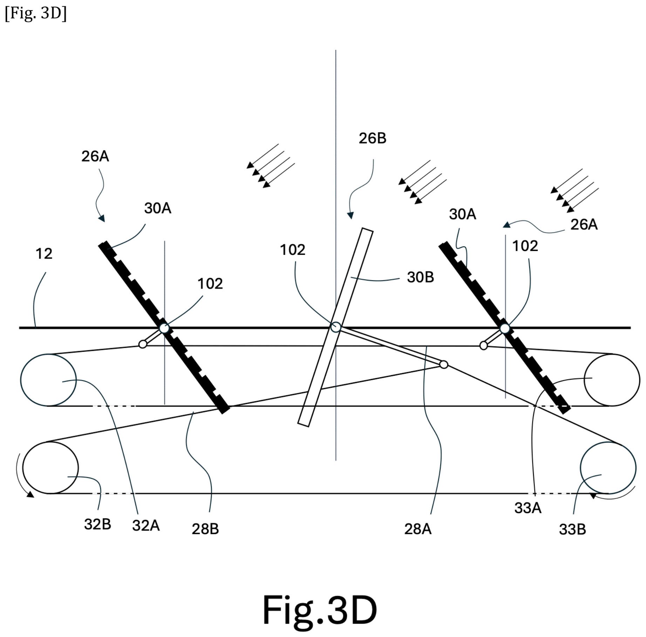

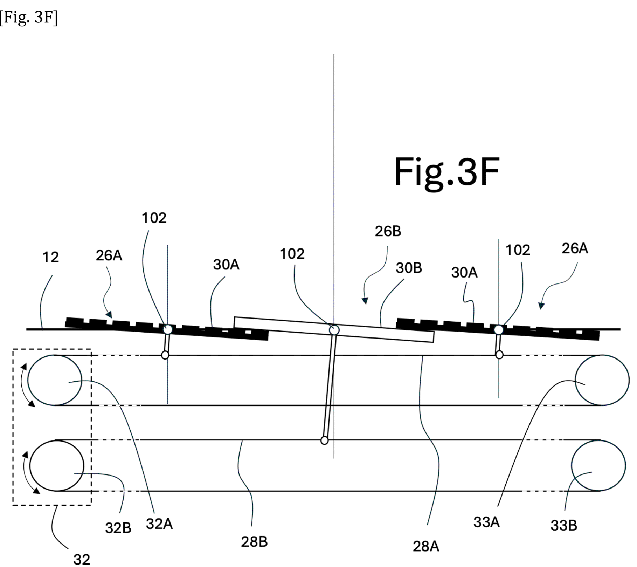

En référence aux figures 3A à 3E, Les panneaux inclinables **20** sont libres en rotation autour de l'axe de pivotement **102** dans un secteur angulaire prédéterminé supérieur à **45°,** et de préférence supérieur à **60°C,** par exemple de l'ordre de **90°,** de part et d'autre d'une position de référence dans laquelle la face supérieure **24** est parallèle à l'axe de pivotement **102** et à la direction de référence **100.** Ainsi, chaque panneau inclinable **20** peut prendre au moins une position dite « couvrante » (en l'occurrence deux positions couvrantes, illustrées en figure 3A et 3F, proche de la position de référence) et des positions « ouvertes » (par exemple illustrées en figure 3B ou 3D).

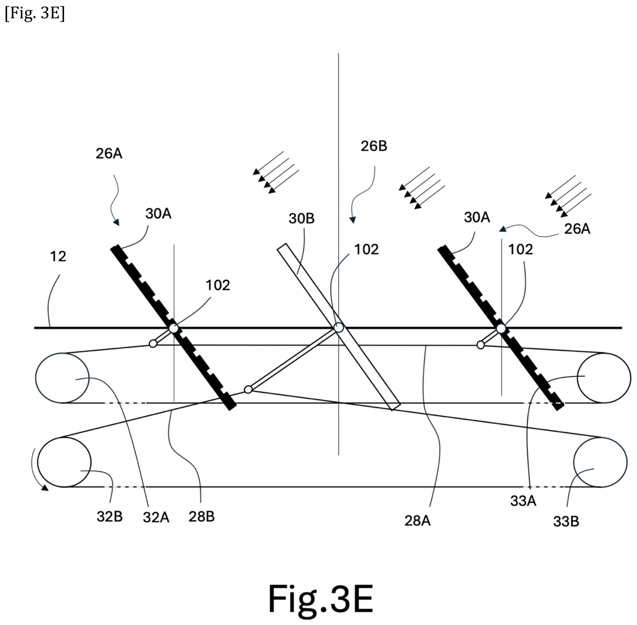

Dans ce mode de réalisation, deux axes de pivotement de panneaux inclinables **20** successifs sont espacés par une distance prédéterminée supérieure à la moitié de la largeur d'un panneau et inférieur à la largeur d'un panneau, cette largeur étant la dimension de la face supérieure **24** perpendiculaire à l'axe de pivotement **102.** Ainsi, dans les position couvrantes illustrées sur les figures 3A et 3E, les deux panneaux inclinables adjacents **20** se chevauchent partiellement. La rangée de panneaux **14** recouvre alors de façon continue le sol sous-jacent.

Les panneaux inclinables **20** sont répartis en deux sous-ensembles **26A, 26B.**

Un premier sous-ensemble **26A** est constitué de panneaux inclinables **20** liés à un premier câble de commande **28A,** de sorte qu'une traction sur le premier câble de commande **28A** dans une direction donnée entraîne un pivotement des panneaux inclinables **20** du premier sous-ensemble **26A** autour de leur axe de pivotement **102** respectifs. Les panneaux inclinables **20** du premier sous-ensemble **26A** comportent chacun au moins un élément actif photovoltaïque et/ou héliothermique **30A** positionné au niveau la face supérieure **24** du corps **22.** En l'occurrence, dans ce mode de réalisation, le ou les éléments actifs **30A** couvrent l'ensemble de la face supérieure **24** du corps **22.**

Un deuxième sous-ensemble **26B,** disjoint du premier sous-ensemble **26A,** est constitué de panneaux inclinables **20** liés à un deuxième câble de commande **28B,** de sorte qu'une traction sur le deuxième câble de commande **28B** dans une direction donnée entraîne un pivotement des panneaux inclinables **20** du deuxième sous-ensemble **26A** autour de leur axe de pivotement **102** respectifs. Dans ce mode de réalisation, le corps **22** des panneaux inclinables **20** du deuxième sous-ensemble **26B** comporte au moins une portion transparente **30B** et ne comportent pas d'élément actif photovoltaïque et/ou héliothermique **30A.** En l'occurrence, les panneaux inclinables **20** du deuxième sous-ensemble **26B** sont entièrement transparents. Par transparence, on entend ici et dans l'ensemble de la demande une transparence qui s'étend dans le spectre utile pour les éléments actifs **30A,** par exemple entre 350nm et 1200nm. De préférence, la portion transparente **30B** n'est plus transparente dans le spectre de l'infrarouge moyen correspondant aux longueurs d'ondes d'émission du rayonnement des sols, notamment dans le domaine de longueurs d'ondes comprises entre 3µm et 60µm.

Dans ce mode de réalisation, le premier câble **28A** constitue une première boucle de câble tendue entre une première poulie motrice bidirectionnelle **32A** et une première poulie réceptrice **33A.** De façon similaire, le deuxième câble **28B** constitue une deuxième boucle de câble tendue entre une deuxième poulie motrice bidirectionnelle **32B** et une deuxième poulie réceptrice **33A.**

Les poulies motrices **32A** et **32B** appartiennent à un ensemble motorisé **32** piloté par un dispositif de commande **34.** Le dispositif de commande **34** comprend par exemple un microprocesseur ou un microcontrôleur. Le dispositif de commande **34** est configuré pour mettre en œuvre un procédé de pilotage des panneaux inclinables **20,** et donc commander les éléments motorisés **32** pour piloter les panneaux inclinables **20.** Le dispositif de commande **34** peut être relié à une horloge et à une mémoire pouvant contenir par exemple une abaque indiquant en fonction du jour dans l'année et de l'heure, la position du soleil ou, ce qui revient au même, l'inclinaison des panneaux leur assurant un ensoleillement maximal.

Le dispositif de commande **34** peut être également relié à divers capteurs. L'installation comprend, à titre d'exemple, un capteur de luminosité, un détecteur de précipitation, un anémomètre, un capteur de mouvement, un capteur de position, et/ou un capteur de courant ou de tension électrique relié à un ou plusieurs panneaux photovoltaïques parmi les panneaux inclinables **20.** Ces éléments de mesures sont configurés pour relever des informations consistant à caractériser une situation environnementale à un moment précis. Les informations sont relevées périodiquement, par exemple toutes les 15 minutes. Le dispositif de commande **34** peut alors piloter les panneaux inclinables **20** après détermination de la une situation environnementale, en fonction des informations relevées par les éléments de mesures.

Dans ce mode de réalisation, les panneaux inclinables **20** des deux sous-ensembles **26A, 26B** sont disposés en alternance le long des deux câbles porteurs **12** pour former la rangée de panneaux **14.** Autrement dit, deux panneaux inclinables **20** actifs successifs du premier sous-ensemble **26A** sont séparés par un panneau inclinable **20** transparents du deuxième sous-ensemble **26B** et deux panneaux inclinables **20** transparents successifs du deuxième sous-ensemble **26A** sont séparés par un panneau inclinable **20** actif du premier sous-ensemble **26B.**

Le fonctionnement de l'installation est illustré sur les figures 3A à 3E. Sur la figure 3A, les panneaux inclinables **20** sont en position couvrante, par exemple pour protéger le sol sous-jacent d'une précipitation, ou pour limiter de refroidissement radiatif du sol. Dans cette position couvrante, la couverture offerte par les panneaux inclinables **20** est continue et les panneaux sont partiellement superposés. Cette position sera également adoptée pour une orientation optimale des éléments actifs **30A,** lorsque la direction des rayons du soleil **S** est perpendiculaire à la surface supérieure **24** des panneaux **20** en position couvrante.

Pour suivre le soleil les panneaux **20** du premier sous-ensemble **26A** peuvent être basculés à partir de la position de la figure 3A dans la position illustrée sur la figure 3B en entraînant la poulie motrice **32A,** sans qu'il soit nécessaire d'entraîner le deuxième sous-ensemble **26B.**

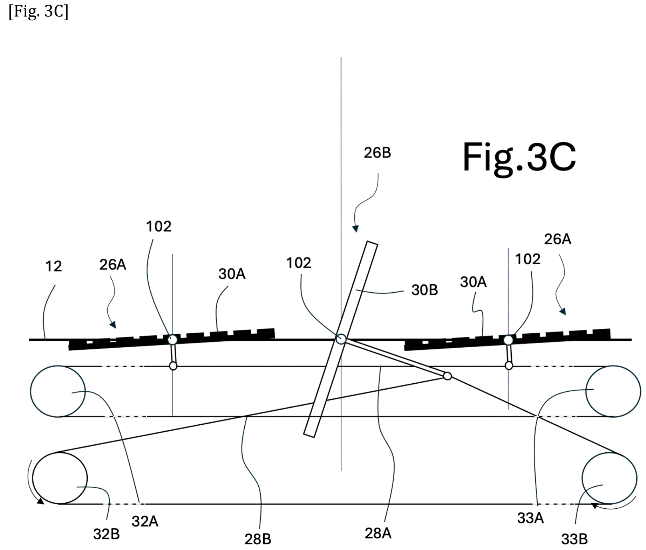

Si par contre on souhaite, à partir de la position de la figure 3A, basculer les panneaux **20** du premier sous-ensemble **26A** dans la position de la figure 3D, il est nécessaire de passer par une étape intermédiaire illustrée sur la figure 3C, dans laquelle les panneaux **20** du deuxième sous-ensemble **26B** sont basculés, en actionnant la poulie motrice **32B,** dans une position effacée qui permet le passage des panneaux **20** du premier sous-ensemble.

Le cas échéant, une deuxième position couvrante peut être obtenue, illustrée en figure 3F, qui nécessite, à partir de la position de la figure 3D, de faire basculer au préalable des panneaux **20** du deuxième sous-ensemble **26B** dans la position de la figure 3E en actionnant la poulie motrice **32B,** puis d'actionner simultanément les poulies **32A** et **32B** pour atteindre la position couvrante de la figure 3F.

Les panneaux inclinables **20** transparents du deuxième sous-ensemble **26B** interposés entre les éléments actifs **30A** portés pas les panneaux inclinables **20** du premier sous-ensemble permettent, dans les positions inclinées des figures 3B, 3D et 3E, d'exposer l'intégralité des éléments actifs **30A** aux rayons incidents du soleil, sans créer de zone d'ombre. Il en va de même dans les positions couvrantes des figures 3A et 3F, où le recouvrement d'une partie des éléments actifs par les panneaux transparents n'est pas pénalisant. Ainsi, l'installation combine une utilisation optimale des éléments actifs **30A,** orientables vers les rayons incidents et ne subissant pas de zones d'ombres, avec une capacité couvrante sans discontinuité dans les positions couvrantes des figures 3A et 3F. La rangée de panneaux inclinables **14** selon le premier mode de réalisation permet donc, par la mobilité panneaux inclinables **20 :**
- Une orientation optimale sans ombre des panneaux inclinables, de façon à ce que les éléments actifs **30A** soient perpendiculaire aux rayons solaires incidents afin d'optimiser le rendement photovoltaïque ou héliothermique dans des phases de production
- Des positions couvrantes pour protéger le sol sous-jacent en cas de précipitation ou la nuit ;
- Des positions de protection de l'installation en cas de fort vent, dans lesquelles les panneaux sont positionnés de façon à minimiser leur prise au vent.

Par ailleurs, la présence de portions transparentes **30B** interposées entre les éléments actifs **30A,** permet d'éviter les zones d'ombre lorsque les éléments actifs **30A** sont inclinés, ce qui optimise, pour une surface d'élément actifs **30A** donnée, la récupération de l'énergie solaire.

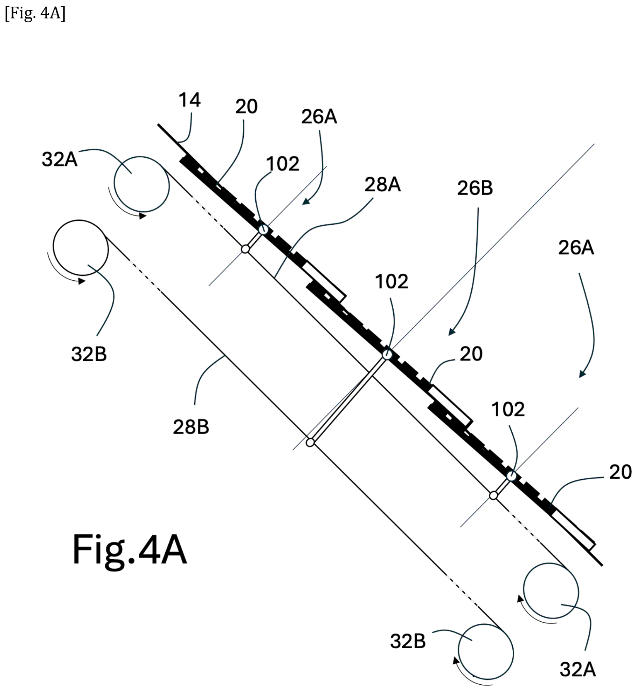

Un deuxième mode de réalisation, illustré sur les figures 4A à 4D, se distingue du premier mode de réalisation par les différences suivantes :
- La direction de référence **100** définie par la structure porteuse **36** est inclinée, par exemple parce que l'installation est positionnée sur un sol en pente. Cette inclinaison est très prononcée sur les figures 4A à 4D, et pourra le cas échéant être moins importante.
- Les panneaux inclinables **20** du premier sous-ensemble **26A** comportent à la fois au moins un élément actif photovoltaïque ou héliothermique **30A** et au moins une portion transparente **30B.** Dans la position de référence où le panneau inclinable est parallèle à la direction de référence **100,** ou dans la position couvrante de la figure 4A qui en est proche, l'élément actif **30A** occupe la partie haute du panneau inclinable **20** et la portion transparente **30B** occupe la partie basse du panneau inclinable **20.**
- Les panneaux **20** du deuxième sous-ensemble **26B** comportent à la fois au moins un élément actif photovoltaïque ou héliothermique **30A** et au moins une portion transparente **30B.** Dans la position de référence où le panneau inclinable est parallèle à la direction de référence **100,** ou dans la position couvrante de la figure 4A qui en est proche, l'élément actif **30A** occupe la partie haute du panneau inclinable **20** et la portion transparente **30B** occupe la partie basse du panneau inclinable **20.**
- le premier câble **28A** constitue un câble dont les extrémités sont enroulées sur deux tambours moteurs **32A** antagonistes, chacun apte à tirer le premier câble **28A** dans un sens ;
- le deuxième câble **28B** constitue un câble dont les extrémités sont enroulées sur deux tambours moteurs **32B** antagonistes, chacun apte à tirer le deuxième câble **28B** dans un sens.

L'installation selon ce deuxième mode de réalisation fonctionne de la façon suivante.

Dans la position couvrante de la figure 4A, les panneaux inclinables des deux sous-ensembles **26A** et **26B** forment un tuilage sans discontinuité, avec un recouvrement de la partie haute des éléments actifs **30A** par la portion transparente **30B** d'un panneau inclinable adjacent. Dans cette position, les précipitations s'écoulent naturellement par gravité d'un panneau inclinable à l'autre. La partie recouverte des éléments actifs **30A** n'en assure pas moins sa fonction de captation de l'énergie solaire, du fait de la transparence des portions transparentes **30B.**

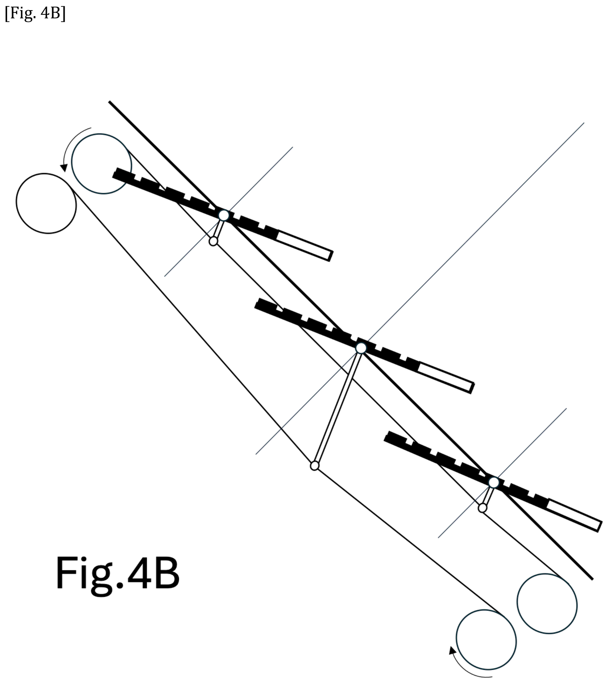

Le passage de la position couvrante de la figure 4A à une position moins inclinée des panneaux **20** s'effectue en actionnant les tambours moteurs **32A** et **32B** comme illustré sur la figure 4B.

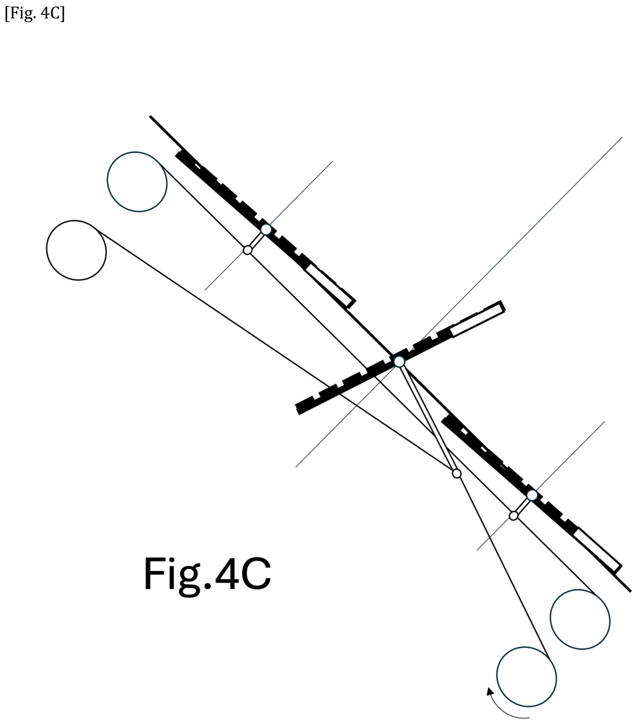

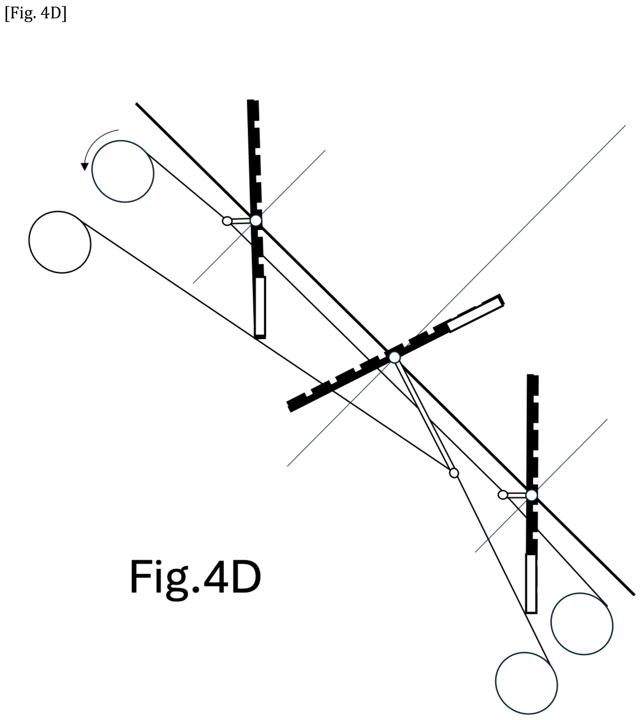

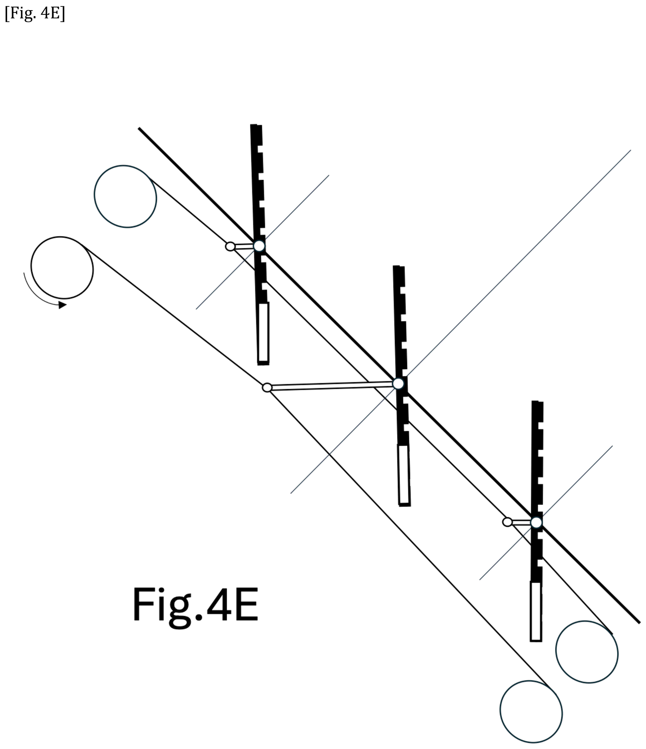

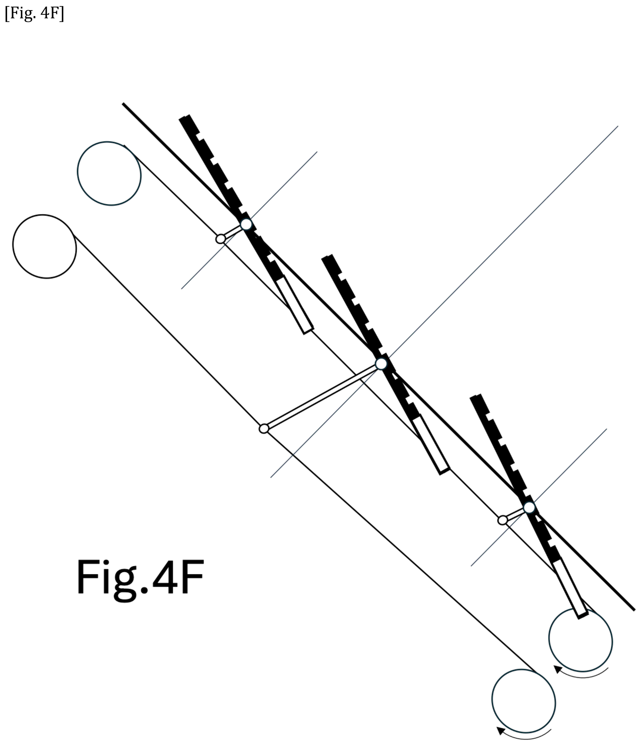

Le passage de la position couvrante de la figure 4A à la position plus inclinée de la figure 4F nécessite deux étapes intermédiaires transitoires illustrées sur les figures 4C, 4D et 4E, à savoir une séquence dans laquelle dans un premier temps (figure 4C) les panneaux inclinables **20** du deuxième sous-ensemble **26B** sont positionnés de manière à s'effacer et à laisser dans un deuxième temps (figure 4D) le passage pour les panneaux inclinables **20** du premier sous-ensemble **26A** jusqu'à ce que ceux-ci se positionnent dans une position transitoire qui permet le retournement des panneaux inclinables du deuxième sous-ensemble **26B** jusqu'à la position de la figure 4E, avant que finalement tous les panneaux puissent être amenés dans la position finale souhaitée de la figure 4F. Dans la position de la figure 4F la partie haute des éléments actifs **30A** projette une ombre sur le panneau inclinable **20** immédiatement supérieur dans la rangée de panneaux **14,** mais uniquement dans la portion transparente **30B,** de sorte que les éléments actifs **30A** reçoivent pleinement le soleil.

L'inclinaison des panneaux inclinables **20** peut être commandée en fonction de la déclinaison du soleil, au cours de l'année et/ou au cours de la journée. L'inclinaison des panneaux inclinables dans la position couvrante de la figure 4A est par exemple choisie pour obtenir le meilleur rendement le jour de l'équinoxe. L'inclinaison dans la position de la figures 4B est par exemple choisie chaque jour du printemps ou de l'été pour obtenir le meilleur rendement du jour et l'inclinaison dans la position de la figure 4F est par exemple choisie chaque jour de l'automne ou de l'hiver pour obtenir le meilleur rendement du jour.

Le premier et le deuxième modes de réalisation ont en commun que les panneaux inclinables **20** du deuxième sous-ensemble **26B** sont intercalés entre les panneaux inclinables **20** du premier sous-ensemble **26A,** ce qui permet entre autres aux panneaux inclinables **20** de la rangée **14** de se chevaucher deux à deux en position couvrante tout en permettant aux panneaux inclinables **20** d'être inclinés dans les deux sens par rapport à la position couvrante.

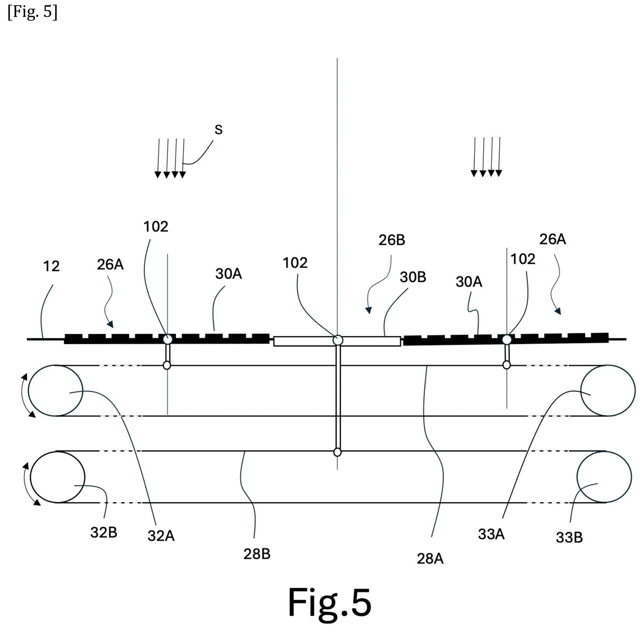

Le même avantage est obtenu lorsque, en variante des premiers et deuxième modes de réalisation, les panneaux inclinables **20** des deux sous-ensembles **26A, 26B** sont disposés bout à bout en position couvrante, sans se chevaucher, selon un troisième mode de réalisation illustré par exemple sur la figure 5 en position couvrante. Dans cette configuration, les mêmes séquences d'activation que pour les précédents modes de réalisation sont mises en œuvre pour éviter tout contact lors du passage d'un côté à l'autre d'une position couvrante.

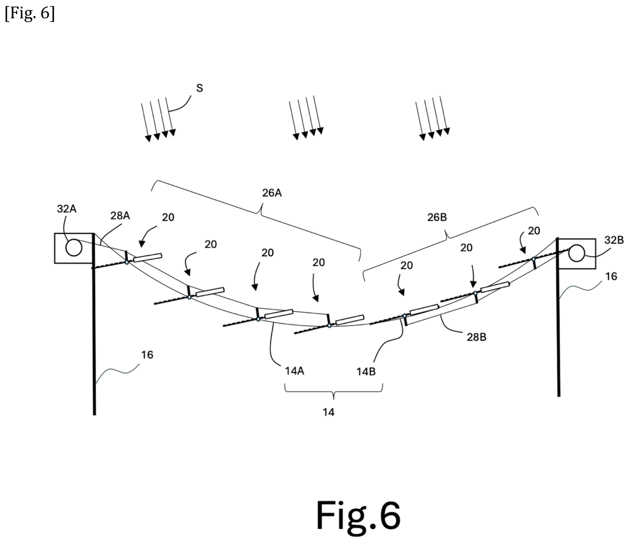

L'installation selon le quatrième mode de réalisation de la figure 6 diffère des précédentes en ce que les panneaux inclinables **20A** du premier sous-ensemble **26A** sont disposés côte-à-côte le long d'une première partie **14A** d'un câble porteur en chaînette, alors que les panneaux inclinables **20** du deuxième sous-ensemble **26B** sont disposés côte-à-côte le long d'une deuxième partie **14B** du câble porteur en chaînette, les parties du câble porteur **12** ayant des pentes différentes, ici en sens contraire, qui justifient de commander l'inclinaison de chaque sous-ensemble **26A, 26B** de façon indépendante, pour orienter l'ensemble des panneaux inclinables **20** de façon appropriée en fonction des rayons incidents du soleil. Comme dans le deuxième mode de réalisation des figures 4A à 4F, on peut prévoir que chacun des panneaux inclinables **20** comporte un élément actif **32A** et une portion transparente **32B,** de façon à ce que les panneaux inclinables ne projettent pas sur les éléments actifs **32A** des panneaux inclinables **20** suivants de la rangée une ombre qui viendrait diminuer le rendement de l'installation.

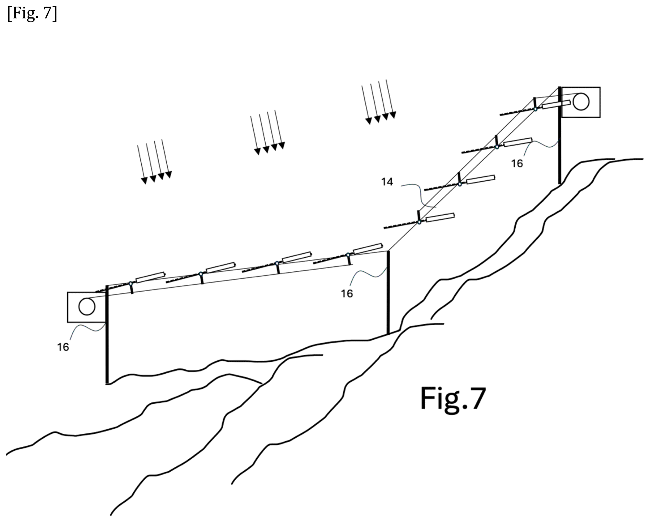

Un autre exemple d'une telle disposition est proposé avec le cinquième mode de réalisation illustré sur la figure 7, qui diffère du précédent essentiellement par le fait que l'installation équipe un terrain avec une pente variable, qui est à l'origine de la différence de pente entre la première partie **14A** du câble porteur et la deuxième partie **14B** du câble porteur. Les installations des figures 6 et 7 ont en commun de ne pas être nécessairement couvrante, au sens où une distance suffisante est prévue entre les panneaux pour qu'ils ne s'entrechoquent pas. Le cas échéant, on peut toutefois prévoir en variante une version couvrante, pour autant que des précautions soient prise pour limiter le débattement angulaire de chaque sous-ensemble **26A, 26B** d'un seul côté de la position couvrante.

D'une manière plus générale, ce mode de réalisation illustre que l'invention peut présenter autant de brins de câbles de commande qu'il y a de portions de rangée de panneaux inclinables **14** suivant des lignes de pentes différentes, et autant de sous-ensembles distincts de panneaux **20** que de brins de câbles de commande.

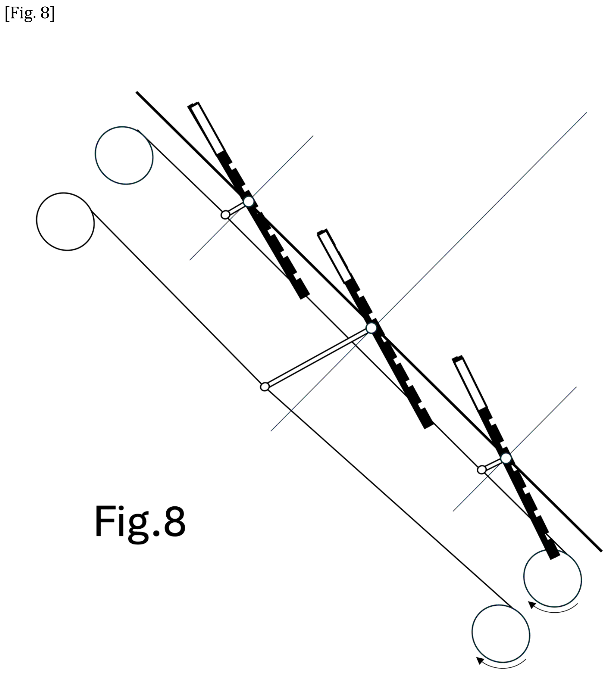

Un sixième mode de réalisation, illustré sur la figure 8, diffère du deuxième mode de réalisation en ce que les portions transparentes **30B** sont disposées dans la partie haute des panneaux inclinables **20.**

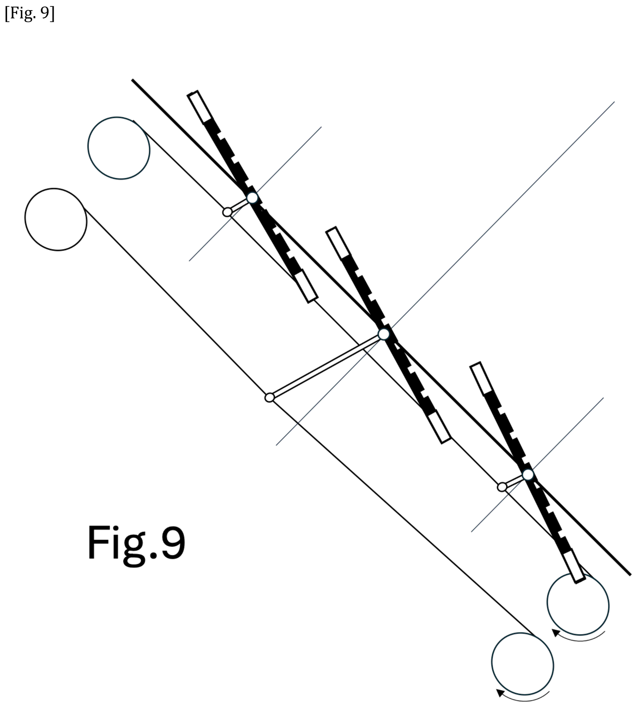

Un septième mode de réalisation, illustré sur la figure 9, diffère du deuxième mode de réalisation en ce que les panneaux inclinables **20** du premier et du deuxième sous-ensemble **26B** comprennent chacun un élément actif **30A** encadré par deux portions transparentes **30B.**

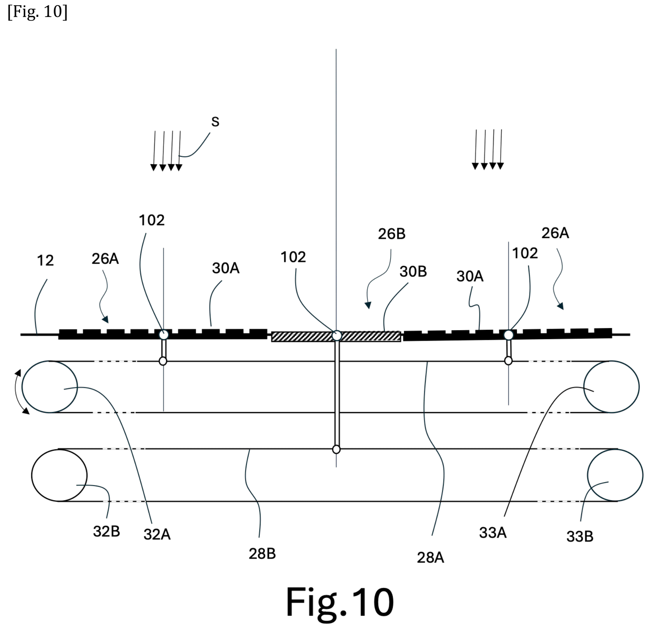

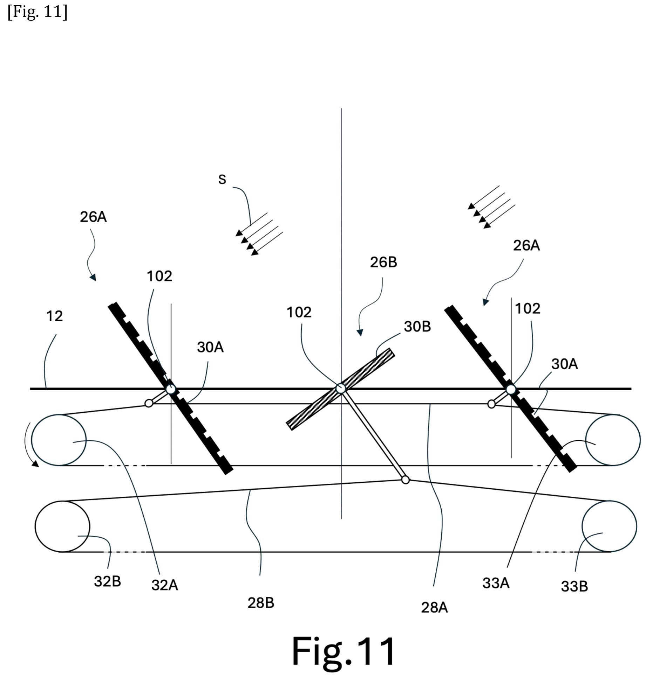

Un huitième mode de réalisation illustré sur les figures **10** et **11****,** en variante du troisième mode de réalisation de la figure 5, diffère des précédents en ce que les panneaux inclinables **20** du deuxième sous-ensemble **26B** sont opaques. Dans les phases de captation de l'énergie solaire incidente, les panneaux inclinables **20** du deuxième sous-ensemble **26B** sont orientés de manière à minimiser leur ombre portée, donc à angle droit par rapport au panneaux inclinables du premier sous-ensemble **26A,** comme illustré sur la figure **11****.** Le cas échéant, panneaux inclinables **20** du deuxième sous-ensemble **26B** peuvent être réfléchissants, par exemple constitués de miroirs, qui peuvent le cas échéant être orientés de manière à renvoyer tout ou partie des panneaux inclinables du premier sous-ensemble **26A.** Une telle disposition est particulièrement avantageuse si les panneaux inclinables **20** du premier sous-ensemble **26A** sont bifaciaux, au sens où ils sont capables de produire de l'énergie à partir d'un rayonnement qui arrive indifféremment sur leur face supérieure ou leur face inférieure.

Un neuvième mode de réalisation, non illustré, diffère des précédents modes de réalisation en ce que les pivots **23** définissent un axe de pivotement **102** qui est décalé par rapport centre de gravité des panneaux **20** et par rapport au barycentre géométrique des panneaux **20.** L'axe de pivotement **102** peut par exemple coïncider avec une arête du panneau qui s'étend d'un des câbles porteurs **12** à l'autre, ou au moins être plus proche d'une telle arête que du centre de gravité du panneau **20.** Ceci peut être vrai pour tous les panneaux inclinables **20,** ou pour certains d'entre eux seulement, par exemple les panneaux inclinables **20** du premier sous-ensemble **26A** ou ceux du deuxième sous-ensemble **26B.**

Un dixième mode de réalisation, non illustré, diffère des précédents modes de réalisation en ce que tous les panneaux inclinables **20** ou certains d'entre deux seulement, par exemple les panneaux inclinables **20** du premier sous-ensemble **26A** ou ceux du deuxième sous-ensemble **26B** présentent, le long d'une arête transversale, un élément de récupération d'eau, par exemple une gouttière.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

La suspension des panneaux inclinables **20** peut être réalisée non pas par des câbles porteurs mais directement par des pylônes disposés sous les panneaux inclinables **20.**

## Revendications

1. Installation solaire (10) comprenant une structure de support comportant une structure porteuse (36) parallèle à une direction de référence (100), et une rangée de panneaux (14) disposés le long de la direction de référence (100), chacun des panneaux (20) étant suspendu par la structure porteuse (36), la rangée de panneaux (14) comportant au moins un premier sous-ensemble (26A) de panneaux inclinables (20) qui sont inclinables chacun au moins entre une position couvrante et une position ouverte par pivotement autour d'un axe de pivotement (102) perpendiculaire à la direction de référence (100) et qui comportent chacun au moins un élément actif photovoltaïque et/ou héliothermique, un premier câble de commande (28A) de pivotement qui s'étend parallèlement à la direction de référence (100) étant relié aux panneaux inclinables (20) du premier sous-ensemble (26A) de panneaux inclinables (20), l'installation solaire (10) étant **caractérisée en ce que** la rangée de panneaux (14) comporte au moins un deuxième sous-ensemble (26B) de panneaux inclinables (20) qui sont inclinables chacun au moins entre une position couvrante et une position ouverte par pivotement autour d'un axe de pivotement (102) perpendiculaire à la direction de référence (100), un deuxième câble de commande (28B) de pivotement qui s'étend parallèlement à la direction de référence (100) étant relié aux panneaux inclinables (20) du deuxième sous-ensemble (26B) de panneaux inclinables (20), le premier et le deuxième sous-ensembles (26A, 26B) de panneaux inclinables (20) étant disjoints.

2. Installation solaire (10) selon la revendication 1, **caractérisée en ce que** dans la position couvrante, la rangée de panneaux (14) forme une couverture continue.

3. Installation solaire (10) selon la revendication 2, **caractérisée en ce que** dans la position couvrante, les panneaux inclinables (20) se chevauchent partiellement et forment un tuilage le long de la position de référence.

4. Installation solaire (10) selon la revendication 2, **caractérisée en ce que** dans la position couvrante, les panneaux inclinables (20) se joignent par contact sans chevauchement le long de la direction de référence (100).

5. Installation solaire (10) selon la revendication 1, **caractérisée en ce que** dans la position couvrante, les panneaux inclinables (20) sont distants les uns des autres.

6. Installation solaire (10) selon l'une quelconque des revendications précédentes, **caractérisée en ce que** deux panneaux inclinables (20) successifs quelconques du premier sous-ensemble (26A) de panneaux inclinables (20) sont séparés par un panneau inclinable (20) du deuxième sous-ensemble (26B) de panneaux inclinables (20), et deux panneaux inclinables (20) successifs quelconques du deuxième sous-ensemble (26B) de panneaux inclinables sont séparés par un panneau inclinable (20) du premier sous-ensemble (26A) de panneaux inclinables (20).

7. Installation solaire (10) selon l'une quelconque des revendications 1 à 6, **caractérisée en ce que** les panneaux inclinables (20) du deuxième sous-ensemble (26B) de panneaux inclinables (20) comportent chacun au moins un élément actif photovoltaïque et/ou héliothermique.

8. Installation solaire (10) selon l'une quelconque des revendications 1 à 6, **caractérisée en ce que** certains au moins des panneaux inclinables (20) du deuxième sous-ensemble (26B) de panneaux inclinables (20) ne comportent pas d'éléments actifs photovoltaïque et/ou héliothermique.

9. Installation solaire (10) selon l'une quelconque des revendications précédentes, **caractérisée en ce que** la rangée de panneaux (14) comporte au moins un sous-ensemble de panneaux non occultants (20'), comportant chacun au moins une portion intégralement transparente qui, en position couvrante, permet à une lumière incidente de traverser lesdits panneaux non occultants (20'), le sous-ensemble de panneaux non occultant (20') pouvant inclure tout ou partie du premier sous-ensemble (26A) de panneaux inclinables (20) et/ou du deuxième sous-ensemble (26B) de panneaux inclinables (20).

10. Installation solaire (10) selon l'une quelconque des revendications précédentes, **caractérisée en ce qu'**elle comporte au moins un premier moteur de traction du premier câble de commande.

11. Installation solaire (10) selon la revendication 10, **caractérisée en ce qu'**elle comporte au moins un deuxième moteur de traction du deuxième câble de commande.

12. Installation solaire (10) selon l'une des revendications 10 à 11, **caractérisée en ce qu'**elle comporte un dispositif de commande (34) apte à commander le premier moteur et le cas échéant le deuxième moteur de traction en fonction d'un ou plusieurs signaux en provenance d'un ou plusieurs capteurs, de préférence choisis parmi les capteurs suivants :
- un capteur de luminosité ;
- un capteur d'hygrométrie ;
- un capteur de mouvement ;
- un capteur de position ;
- un capteur de courant ou de tension électrique placé dans un circuit comportant au moins un élément actif d'au moins un des panneaux inclinables du premier sous-ensemble.

13. Procédé de pilotage d'une installation solaire (10) selon l'une quelconque des revendications précédentes, le procédé étant **caractérisé en ce qu'**il comprend une étape (S10) de traction du premier câble de commande (28), de sorte à entraîner la rotation du premier sous-ensembles (26) associé au dit câble de commande (28).

14. Procédé de pilotage selon la revendication 13, **caractérisé en ce qu'**il comporte une étape de traction du deuxième câble, de sorte à entraîner le deuxième câble de commande.

15. Procédé de pilotage selon l'une quelconque des revendications 13 à 14, **caractérisé en ce que**, à partir de la position couvrante, il comprend une séquence d'ouverture comportant :
- une étape de traction du premier câble dans une première direction entraînant un pivotement des panneaux du premier sous-ensemble dans une première direction de rotation ; puis
- une étape de traction du deuxième câble dans une deuxième direction entraînant un pivotement des panneaux du deuxième sous-ensemble dans une deuxième direction de rotation ; puis
- une étape de traction du premier câble dans la deuxième direction entraînant un pivotement des panneaux du premier sous-ensemble dans la deuxième direction de rotation.

16. Procédé de pilotage selon la revendication 15 ou 16, **caractérisé en ce que** le pilotage est fonction d'un ou plusieurs paramètres parmi les paramètres suivants :
- une consigne d'ombrage ;
- une position d'une source lumineuse et/ou thermique prédéterminée, de préférence le soleil ;
- un ou plusieurs paramètres environnementaux, par exemple une force de vent, une direction de vent, une intensité de précipitation, et/ou une température ambiante.

17. Dispositif de commande (34) configuré pour mettre en œuvre les étapes du procédé de pilotage selon l'une quelconque des revendications 12 à 18, le dispositif de commande (34) étant **caractérisé en ce qu'**il comporte au moins un microcontrôleur destiné à être relié à un premier moteur pour tracter le premier câble de commande (28A) et, le cas échéant, à un deuxième moteur pour tracter un deuxième câble de commande (28B), et ce que le microcontrôleur est relié à un ou plusieurs capteurs choisis parmi les capteurs suivants :
- un capteur de luminosité ;
- un capteur d'hygrométrie ;
- un capteur de mouvement ;
- un capteur de position ;
- un capteur de courant ou de tension électrique placé dans un circuit comportant au moins un élément actif d'au moins un des panneaux inclinables du premier sous-ensemble.
